Europäisches Patentamt

European Patent Office

Office européen des brevets

(19)

(11) **EP 0 684 448 B1**

(12) **EUROPÄISCHE PATENTSCHRIFT**

(45) Veröffentlichungstag und Bekanntmachung des Hinweises auf die Patenterteilung:
**24.03.2004   Patentblatt 2004/13**

(51) Int Cl.$^7$: **G01B 21/04**

(21) Anmeldenummer: **95107110.9**

(22) Anmeldetag: **11.05.1995**

(54) **Koordinatenmessung an Werkstücken mit Korrekturen von Beschleunigungen**

Coordinate measurement on workpieces with corrections of accelerations

Mesure de coordonnées d'objets avec corrections des accélérations

(84) Benannte Vertragsstaaten:
**DE FR GB IT**

(30) Priorität: **13.10.1994   DE 4436507**
**27.05.1994   DE 4418550**

(43) Veröffentlichungstag der Anmeldung:
**29.11.1995   Patentblatt 1995/48**

(73) Patentinhaber:
• **Carl Zeiss**
**89518 Heidenheim (Brenz) (DE)**
Benannte Vertragsstaaten:
**DE FR IT**
• **CARL-ZEISS-STIFTUNG,**
**HANDELND ALS CARL ZEISS**
**89518 Heidenheim (Brenz) (DE)**
Benannte Vertragsstaaten:
**GB**

(72) Erfinder:
• **Bernhardt, Ralf**
**D-73431 Aalen (DE)**
• **Grupp, Günter**
**D-89558 Böhmenkirchen (DE)**

(56) Entgegenhaltungen:
**EP-A- 0 438 095**          **DE-A- 4 212 455**
**US-A- 4 333 238**

**Beschreibung**

Die Erfindung betrifft ein Verfahren zur Koordinatenmessung an Werkstücken mit einem KMG (Koordinatenmeßgerät), bei dem die ermittelten Meßwerte mit gespeicherten Korrekturwerten verrechnet werden. Sie betrifft ebenfalls ein entsprechendes KMG.

Zur Erhöhung der Meßgenauigkeit von KMG werden bereits seit geraumer Zeit die Meßergebnisse, d.h. die Koordinatenmeßwerte, die von den Maßstäben in den Meßachsen der Maschine geliefert werden, mit rechnerischen Korrekturen versehen. In der Regel werden Korrekturen berücksichtigt, die sich aus den nach dem sogenannten "starren Modell" abgeleiteten statischen Abweichungen der Führungen der Meßschlitten des KMG von einem geradlinigen und rechtwinkligen Koordinatsystem ergeben. Derartige Korrekturverfahren sind beispielsweise beschrieben in dem Artikel "Numerical Error Correction of a Coordinate Measuring Machine" von K. Busch, H. Kunzmann und F. Wäldele in den Proceedings of the International Symposium on Metrology for Quality Control in Production, Tokyo 1984, Seite 284 - 288 sowie in der US-PS 48 19 195.

Des weiteren ist es bekannt, bei berührend antastenden Koordinatenmeßgeräten die Biegung des Taststifts während des Kontakts mit dem zu vermessenden Werkstück größenmäßig zu erfassen und bei der anschließenden Auswertung der Meßwerte mit zu berücksichtigen. Ein solches Verfahren ist beispielsweise beschrieben in dem Artikel "Korrektur der Taststiftbiegung bei Messungen mit Mehrkoordinaten-Meßgeräten" von A. Weckenmann, G. Goch und H.D. Springborn, in Feinwerktechnik und Meßtechnik 87 (1979) 1, Seite 5 - 9 sowie in dem Artikel "Messende Taster mit mehreren Freiheitsgraden" von W. Lotze in Technische Rundschau Heft 50 (1992) Seite 20 - 25.

Bei diesem Verfahren wird der Biegetensor für den jeweiligen Taststift durch mehrfaches Antasten einer Kalibrierkugel mit unterschiedlichen Meßkräften bestimmt. Hieraus werden dann Korrekturwerte für die verschiedenen bei der Messung an einem Werkstück benutzten Taststifte berechnet und gespeichert und im Zuge der Auswertung der Meßergebnisse bei der Vermessung von unbekannten Werkstücken dann mit berücksichtigt.

Es ist des weiteren bekannt, die dynamischen Abweichungen der Meßschlitten eines KMG zu korrigieren, d. h. die Fehler die auftreten, weil der am Ende des Meßarms angebrachte Tastkopf des KMG nicht in Ruhe ist sondern durch Störeinflüsse wie z.B. die Beschleunigung der Antriebe etc. um seine Ruhelage schwingt. Ein solches Korrekturverfahren ist beispielsweise in der US-PS 43 33 238 beschrieben. Derartige dynamische Korrekturverfahren verwenden Sensoren, die in der Nähe des schwingenden Tastkopfs angeordnet sind und Signale abgeben, die den Verlauf der Störschwingung zum Antastzeitpunkt repräsentieren.

Die beschriebenen bekannten Verfahren korrigieren jedoch alle nur einen Teil der Fehler, die bei der Messung mit einem KMG auftreten können. Mit diesen Verfahren läßt sich zwar die Meßunsicherheit von KMG reduzieren, es verbleiben aber immer noch Restfehler beträchtlicher Höhe, die die Meßgenauigkeit von KMG beschränken.

Aufgrund der Beschleunigung der Meßschlitten und der Massenträgheit der bewegten Teile treten Reaktionskräfte auf, die zu einer Deformation der Aufbauten des Koordinatenmeßgeräts und damit zu Meßfehlern führen.

In der Dissertation von J. Soons mit dem Titel "Accuracy analysis of multi-axis machines" vom 16. Juni 1993, Universität Eindhoven, siehe dort Seite 85-91, sind Fehlereinflüsse in einem als elastisch nachgiebig modellierten Koordinatenmessgerät untersucht worden. Hierin werden nur die Masseverlagerungen aufgrund der bewegten Messschlitten als Fehlerursache untersucht und lassen den Einfluß von dynamischen, auf das Maschinengestell wirkenden Beschleunigungskräfte außer Betracht.

In der Dissertation von J.W.M.C. Teeuwsen, mit dem Titel "performance evaluation and a quality control system for three coordinate measuring machines" vom 27. Januar 1989, Universität Eindhoven, siehe dort Kapitel 6, sind die Auswirkungen von dynamischen Beschleunigungskräften der Mechanik des Koordinatenmessgerätes auf die Messergebnisse beschrieben. Um diese abzuschätzen wird mit einem Hammerschlag das Koordinatenmessgerät zu Schwingungen angeregt und über die hieraus ergebenden Schwingungen eine dynamische Transferfunktion bestimmt.

Die Druckschrift DE 42 12 455 A1 zeigt ein Verfahren zur Messung von Formelementen auf einem Koordinatenmessgerät. Da mit dem hierin beschriebenen Verfahren sehr schnell gemessen wird, können Fehler aufgrund der dynamischen, auf das Maschinengestell wirkenden Beschleunigungskräfte auftreten. Es wird deshalb hierin vorgeschlagen, die Beschleunigungskräfte und das vorbestimmte Biegeverhalten der verfahrbaren Teile des Koordinatenmessgerätes in die Berechnung der Ist-Kontur eines gemessenen Formelements mit einzubeziehen. Wie das dynamische Biegeverhalten vorteilhaft ermittelt wird, ist hierin nicht beschrieben.

Es ist deshalb die Aufgabe der vorliegenden Erfindung, ein Verfahren oben beschriebener Art, sowie ein entsprechendes Koordinatenmessgerät derart weiter zu bilden, so dass hiermit vorteilhaft die dynamischen Verbiegungen des Koordinatenmessgerätes korrigiert werden können.

Diese Aufgabe wird durch ein Verfahren gemäß Anspruch 1, sowie durch ein entsprechendes Koordinatenmessgerät gemäß Anspruch 17 gelöst.

Mit dem Korrekturverfahren gemäß der Erfindung wird das elastische Biegeverhalten des Koordinatenmeßgeräts aufgrund der Reaktionskräfte beschleunigter Massen für mehrere Stellungen des Tasters im Meßbereich des Koordinatenmeßgeräts bestimmt. Aus den Meßwerten für das Biegeverhalten werden dann Korrekturwerte berechnet, gespeichert und anschließend bei der Vermessung unbekannter Werkstücke mit den z.B. von den Maßstäben des Koordinatenmeßgeräts gelieferten Koordinatenmeßwerten der Antastpunkte verrechnet. Auf diese Weise läßt sich nicht nur die Meßunsicherheit von bereits existierenden Koordinatenmeßgeräten verringern. Die neue Art der Korrektur erlaubt es außerdem, Koordinatenmeßgeräte zukünftig leichter zu bauen, da die mit der Leichtbauweise einhergehende höhere elastische Verformung der Maschine rechnerisch kompensiert werden kann.

Es ist zweckmäßig, die das Biegeverhalten charakterisierten Korrekturwerte als mehrdimensionale Korrekturtabelle zu erstellen und abzuspeichern, wobei dann bei der eigentlichen Korrektur der Meßwerte des Werkstück auch zwischen den gespeicherten Korrekturwerten interpoliert werden kann. Die Interpolation erlaubt es, die Anzahl der zu speichernden Korrekturwerte der Tabelle gering zu halten.

Es ist jedoch auch möglich, die Ortsabhängigkeit der das Biegeverhalten charakterisierenden Korrekturwerte durch mathematische Funktionen, beispielsweise Polynome anzunähern. In diesem Falle ist es lediglich erforderlich, die Koeffizienten dieser Näherungsfunktionen abzuspeichern.

Bei der vorliegenden Erfindung sind die gespeicherten Tabellen bzw. Funktionen abhängig vom Parameter Beschleunigung und die eigentliche Korrektur läuft so ab, daß während eines Meßvorganges die Beschleunigung der Maschinenschlitten durch die Antriebe permanent gemessen oder ermittelt wird und bei der Korrekturrechnung mit einbezogen wird, indem der Meßwert für die Beschleunigung mit den gespeicherten Korrekturwerten, die das Biegeverhalten beschreiben, multipliziert wird.

Besonders hohe Reaktionskräfte bzw. Beschleunigungen treten dann auf, wenn gekrümmte Oberflächen, beispielsweise kreisförmige oder ringförmige Geometrieelemente an einem Werkstück mit hoher Geschwindigkeit abgescannt werden. Ein schnelles Scanning-Verfahren, mit dem sich solche Meßaufgaben lösen lassen, ist beispielsweise in der DE-OS 42 12 455 beschrieben. Es ist nun möglich, unter Benutzung dieses bekannten Verfahrens die zu speichernden Korrekturwerte vorab zu bestimmen, indem ein Prüfkörper in Form eines Lehrringes nacheinander in verschiedenen Positionen im Meßbereich des Koordinatenmeßgeräts fixiert und mit unterschiedlichen Geschwindigkeiten abgescannt wird. Auf diese Weise läßt sich ortsabhängig die Nachgiebigkeit des Maschinenaufbaus als Änderung der Tastkugelposition in Abhängigkeit von der Maschinenbeschleunigung bestimmen.

Es sind jedoch nicht nur die Meßschlitten, die sich unter dem Einfluß der Massenträgheitskräfte verbiegen. Letztere wirken auch auf den nachgiebig im Tastkopf gelagerten Taststift, der bei einem Scan-Vorgang im Kontakt mit der Werkstückoberfläche steht. Die Massenträgheitskräfte des Taststifts erhöhen die Meßkraft bei konkav gescannten Werkstücken und vermindern Meßkräfte beim Scannen konvexer Oberflächen. Die dabei auftretenden dynamischen Verformungen des Taststifts werden zweckmäßig ebenfalls bei der Korrektur der gemessenen Koordinatenmeßwerte berücksichtigt.

Die für die Verformung ursächliche Beschleunigung der Meßschlitten des Koordinatenmeßgeräts kann zwar durch separate Sensoren gemessen werden. Es ist jedoch besonders vorteilhaft, die Beschleunigung der Meßschlitten zu ermitteln, indem die Positionsmeßwerte der den Meßschlitten zugeordneten Meßsysteme, d.h. der Maßstäbe zweimal nach der Zeit differenziert werden. Zusätzliche Sensoren entfallen dann und das Beschleunigungssignal läßt sich durch nur sehr geringen elektronischen Aufwand aus den ohnehin vorhandenen Meßwertgebern für die Position der Maschinenschlitten ableiten.

Vom besonderen Vorteil ist es, wenn das neue Korrekturverfahren zusammen mit den bereits bekannten Korrekturverfahren zur Korrektur der statischen Führungsabweichungen der Meßschlitten nach dem "starren Modell" eingesetzt wird. Der andernfalls in die Qualität der Führungen zu investierende Aufwand beim Bau von Koordinatenmeßgeräten läßt sich dann nämlich weiter verringern.

Weitere Vorteile der Erfindung ergeben sich aus der nachfolgenden Beschreibung von Ausführungsbeispielen anhand der Figuren der beigefügten Zeichnungen.

Figur 1         skizziert den prinzipiellen Aufbau eines Koordinatenmeßgeräts vom Portaltyp;

in Figur 2         ist das Meßvolumen des Koordinatenmeßgeräts aus Figur 1 skizziert, in dem ein zur Aufnahme der Korrekturparameter dienender Lehrring in verschiedenen Positionen fixiert ist;

Figur 3         ist ein Funktionsdiagramm, in dem das Aufsetzen mehrerer Korrekturverfahren auf den y-Meßwert des Koordinatenmeßgeräts aus Figur 1 veranschaulicht wird;

Figur 4         ist ein Diagramm, in dem die Steifigkeit eines Koordinatenmeßgeräts des in Figur 1 beschriebenen Typs abhängig von verschiedenen Postionen im Meßvolumen dargestellt. ist;

Figur 5         ist ein Diagramm, das die dynamische Maschinenbiegung eines Koordinatenmeßgeräts von dem in Figur 1 dargestellten Typ in x- und y-Richtung als Funktion der Beschleunigung in den genannten Meßachsen zeigt;

| Figur 6 | ist ein Diagramm, das die Wirksamkeit des erfindungsgemäßen Korrekturverfahrens beim Scannen eines Lehrrings mit verschiedenen Scangeschwindigkeiten demonstriert; |
|---|---|
| Figur 7 | ist eine vereinfachte Prinzipsskizze, die den Einfluß der dynamischen Massenträgheitskräfte auf den Meßarm und den Taststift des in Figur 1 dargestellten Koordinatenmeßgerät unter dem Einfluß einer in x-Richtung wirkenden Beschleunigung zeigt; |
| Figur 8a und 8b | sind vereinfachte Prinzipskizzen, die den Einfluß der dynamischen Massenträgheitskräfte auf den Meßarm und die Position des Taststifts des in Figur 1 dargestellten Koordinatenmeßgerätes unter dem Einfluß einer in y-Richtung wirkenden Beschleunigung zeigen. |

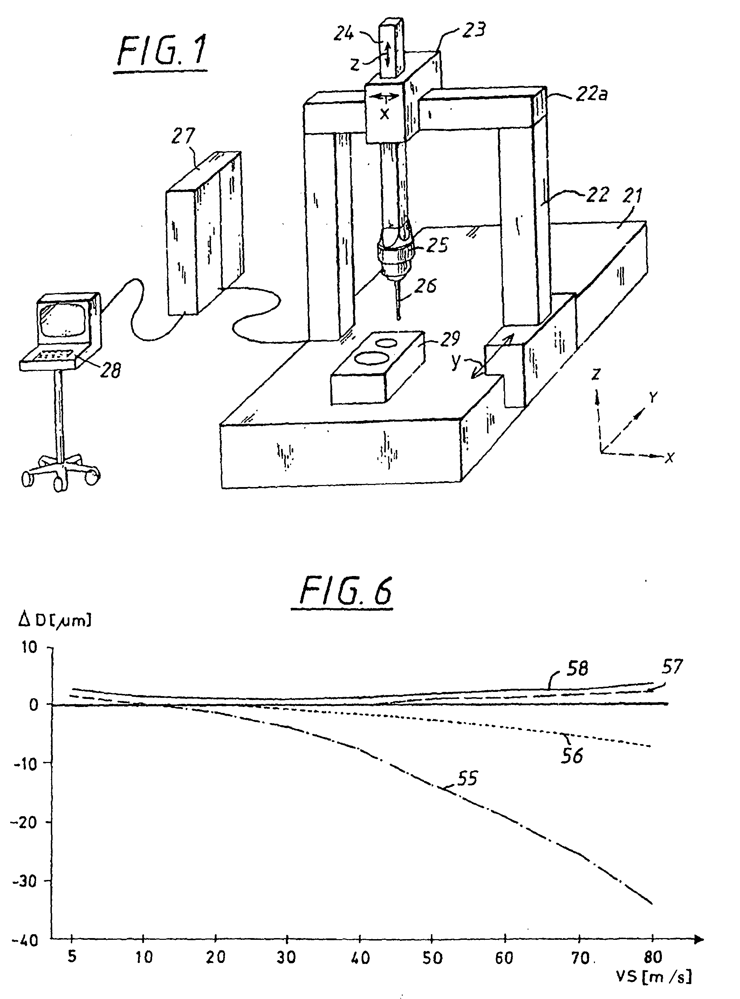

Im folgenden wird anhand der Figuren 1 - 8 erläutert, wie sich die wesentlichen elastischen Deformationen, d.h. die Maschinenbiegungen bei einem Koordinatenmeßgerät vom Portaltyp korrigieren lassen, die aufgrund von Massenträgheitskräften beim Beschleunigen der Meßschlitten auftreten. Das in Figur 1 skizzierte Koordinatenmeßgerät vom Portaltyp besteht aus dem Maschinentisch (21), dem waagerecht darauf in y-Richtung verfahrbaren Portal (22), das den auf dem Portalbogen (22a) in x-Richtung geführten sogenannten Querschlitten (23) trägt, und der im Querschlitten (23) vertikal in z-Richtung geführten Pinole (24), an der der Tastkopf (25) mit dem Taststift (26) hängt.

Die Steuerung des Koordinatenmeßgeräts ist mit (27) und der Rechner mit (28) bezeichnet.

Beim Beschleunigen der drei Meßschlitten (22, 23 und 24) treten in erster Linie folgende elastische Deformationen auf:

1. Die relativ schlanke und leicht gebaute Pinole (24) biegt sich abhängig von ihrer Ausfahrstellung in z-Richtung bei Beschleunigung in x- und y-Richtung entgegen der Richtung der Beschleunigung durch. Dies ergibt zwei Fehleranteile xTx(z,ax) und yTy(z,ay).

2. Außerdem biegt sich der Querträger (22a) und verkippt um die Lagerung der Seitenführung im Portalfuß (22). Auch diese Bewegung hängt ab vom Hebelarm, d.h. von der Stellung des Querschlittens (23) in x-Richtung. Das ergibt einen Fehleranteil yTy(x,ay).

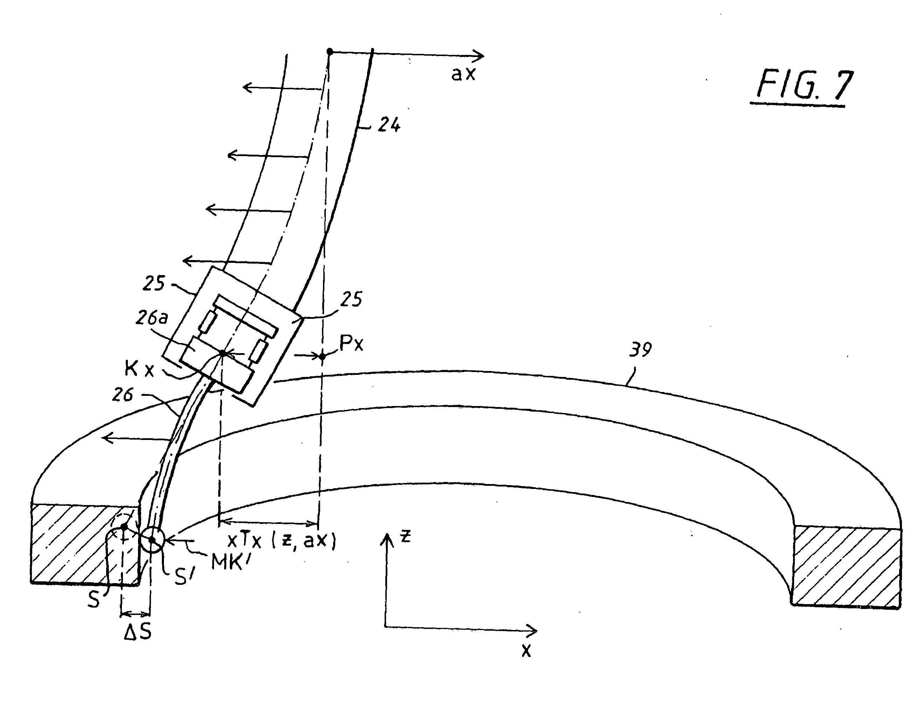

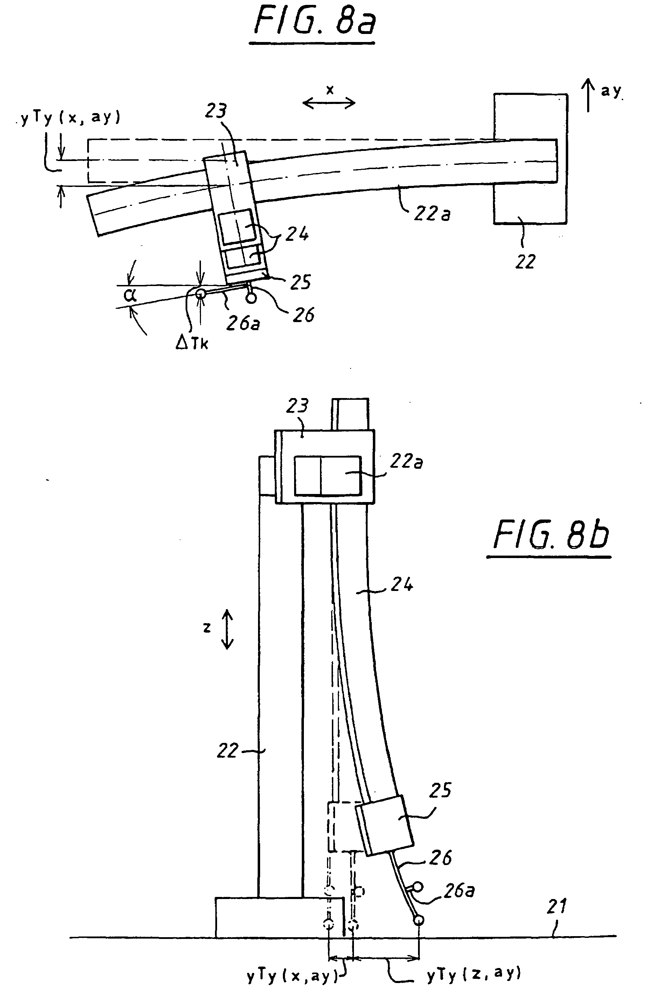

Gegenüber diesen Fehlern sind die anderen elastischen Abweichungen des Portalgerätes vernachlässigbar. Erläutert sind die drei genannten Verformungen bzw. Fehleranteile in den Skizzen nach Figur 7 und 8a und b. Hierbei ist anzumerken, daß dann, wenn am Tastkopf (25) lange bzw. seitlich abgewinkelte Taststifte benutzt werden wie z.B. der Taststift (26a) in Figur 8a ein zusätzlicher Fehler $\Delta$ Tk auftritt. Dieser Fehler hängt ab von der Tasterkoordinate Tk und dem Winkel $\alpha$, um den sich die indirekt am Querträger (22a) gelagerte Pinole (24) gegenüber ihrer kräftefreien Stellung unter dem Einfluß der Maschinenbeschleunigung verdreht hat.

Allgemein lassen sich die Maschinenverformungen aufgrund der Beschleunigung durch folgende Gleichungen beschreiben

$$\vec{K} = \vec{P} + C\,(x,y,z) \cdot \vec{a} \tag{1}$$

$$\begin{vmatrix} Kx \\ Ky \\ Kz \end{vmatrix} = \begin{vmatrix} Px \\ Py \\ Pz \end{vmatrix} + \begin{vmatrix} c11 & c21 & c31 \\ c12 & c22 & c32 \\ c13 & c23 & c33 \end{vmatrix}_{(x,y,z)} \begin{vmatrix} ax \\ ay \\ az \end{vmatrix} \tag{2}$$

wobei in der Vektorschreibweise nach Gleichung (1) $\vec{K}$ die korrigierte Koordinate des Tastkopfs, $\vec{P}$ die über die Maßstäbe gemessene Position des Tastkopfes, $\vec{a}$ die Beschleunigung und C ein Tensor ist, der die Nachgiebigkeit des Maschinenaufbaus beschreibt. Dieser Tensor C ist abhängig von der Ausfahrlänge der Meßschlitten, d.h. von der Position des Tastkopfs (25) im Meßbereich der Maschine.

Mit der vorhergehend gemachten Annahme, daß bei dem Koordinatenmeßgerät des in Figur 1 skizzierten Typs nur die drei genannten Fehleranteile eine Rolle spielen, gelangt man von der Komponentenschreibweise nach Gleichung (2) zu den Gleichungen (3) und (4).

$$Ky = Py + c22(x,z) \cdot ay \tag{3}$$

$$Kx = Px + c11(z) \cdot ax \tag{4}$$

Daraus ergibt sich, daß man die tatsächlichen Koordinaten Kx und Ky aus den von den Meßsystemen des Koordinatenmeßgeräts gelieferten Positionsmeßwerten Py und Px gewinnt, indem man die von der Stellung des Tastkopfs im Meßvolumen abhängigen Tensorelemente c22(x,z) und c11(z) mit dem jeweils gemessenen Beschleunigungskomponenten ay und ax multipliziert.

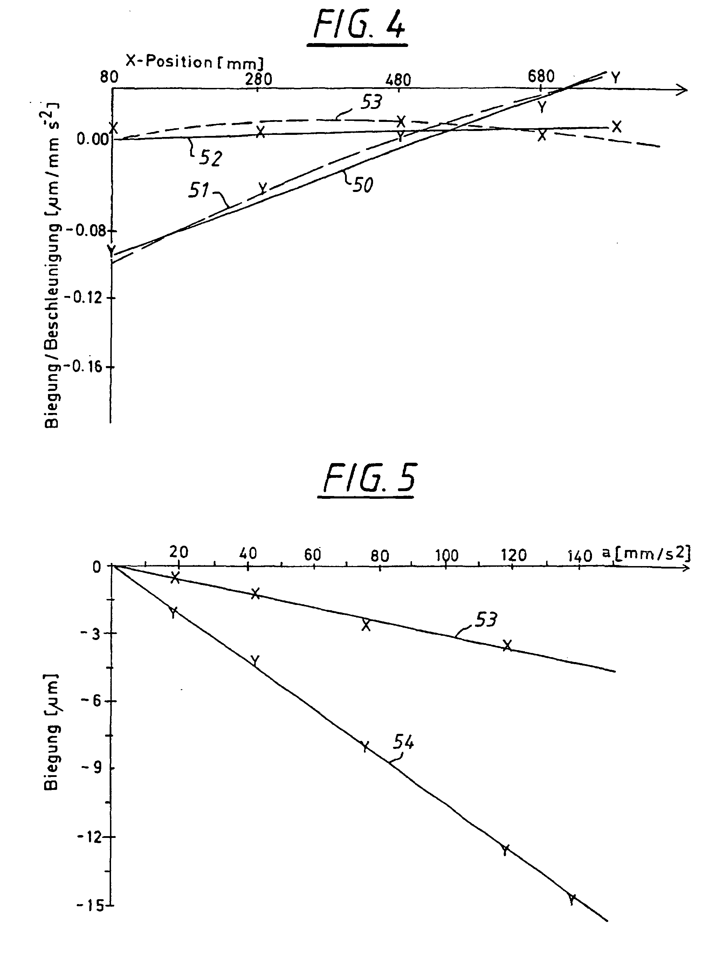

Zur Ermittlung der Elemente c22 und c11 des Biegetensors muß die Änderung der Tasterposition in Abhängigkeit von der Maschinenbeschleunigung bestimmt werden. Hierzu geht man wie folgt vor: Ein Lehrring (39) wird mit verschiedenen Geschwindigkeiten (und somit auch mit unterschiedlichen Beschleunigungen der Meßschlitten (22 und 23)) gescannt. Dabei gibt sich in den beteiligten Maschinenachsen x und y ein sinusförmiger Beschleunigungsverlauf. Die Maximalamplituden der Beschleunigungskomponenten ax und ay treten dabei in den Hochpunkten des Lehrrings in der jeweiligen Achsrichtung x,y auf. Werden für die Kreiseinpassung der so erhaltenen Meßwerte nur die jeweiligen Hochpunkte verwendet, so mißt man eine zur Maschinenbeschleunigung proportionale scheinbare Durchmesseränderung, die dem Meßfehler aufgrund der dynamischen Maschinenbiegung entspricht. Figur 5 zeigt beispielhaft diesen Meßfehler, die "dynamische Maschinenbiegung" in den beiden Meßrichtungen x und y als Funktion der jeweiligen Beschleunigungskomponente ax und ay. Die Steigung der Geraden (53 und 54) ergibt die Tensorelemente c11(z) und c22(x,y) des Biegetensors an dem jeweiligen Meßort.

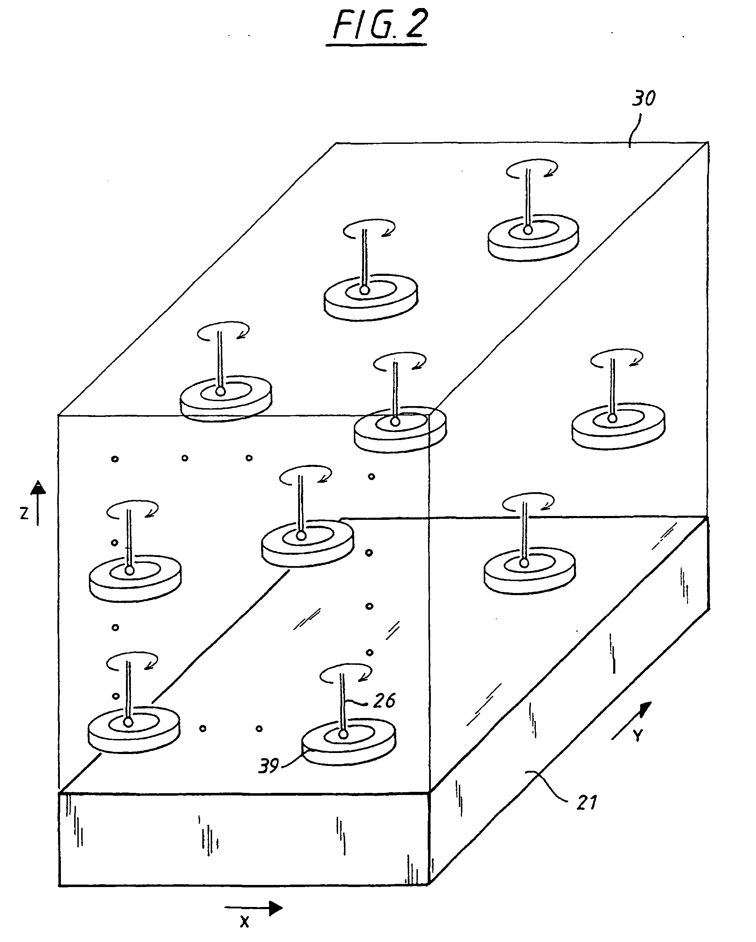

Diese Messungen werden wie in Figur 2 skizziert an verschiedenen Positionen in der x/z-Ebene des Meßvolumens (30) des Koordinatenmeßgeräts wiederholt. Die Beschränkung auf die x/z-Ebene ist in diesem Falle ausreichend, weil die Steifigkeit des Portalgeräts praktisch nicht von der y-Koordinate abhängt. Der in Gleichung 1 und 2 beschriebene Ansatz ist jedoch auch auf KMG anderer Bautypen anwendbar und dann kann es erforderlich sein, wie in Figur 2 skizziert, auch die Abhängigkeit der Biegung in Richtung der y-Achse zu erfassen.

Für die anschließende rechnerische Korrektur könnten die ortsabhängigen Tensorelemente c11 und c22 nach Art eines mehrdimensionalen Datenfeldes abgespeichert werden, wobei Zwischenwerte interpoliert werden können. Jedoch lassen sich die dabei gemessenen dynamischen Steifigkeiten auch sehr gut durch Funktionen zweiter Ordnung über der Maschinenposition (Px, Py, Pz) annähern. Die Funktionskoeffizienten A0, A1 und A2 der Polynome c11 = F (z), c22 = F(z) + F(x) werden durch eine Besteinpassung ermittelt und für die Korrektur in einem nicht flüchtigen Speicher in der Steuerung (27) des Koordinatenmeßgeräts in Figur 1 abgelegt. Für die Funktion c11 = F(z) gilt also beispielsweise die Gleichung:

$$c11(z) = A0 + A1 \cdot z + A2 \cdot z^2. \tag{5}$$

Figur 4 zeigt den typischen Verlauf der Funktionen c22 = F(x) und c11 = F(x) für ein Koordinatenmeßgerät des Typs PRISMO der Anmelderin. Im Bild ist für die Funktionen c22 = F(x) und für die Funktion c11 = F(x) gleichzeitig die Einpassung einer linearen Funktion (50) bzw (52) und einer Funktion zweiter Ordnung (51) bzw. (53) dargestellt.

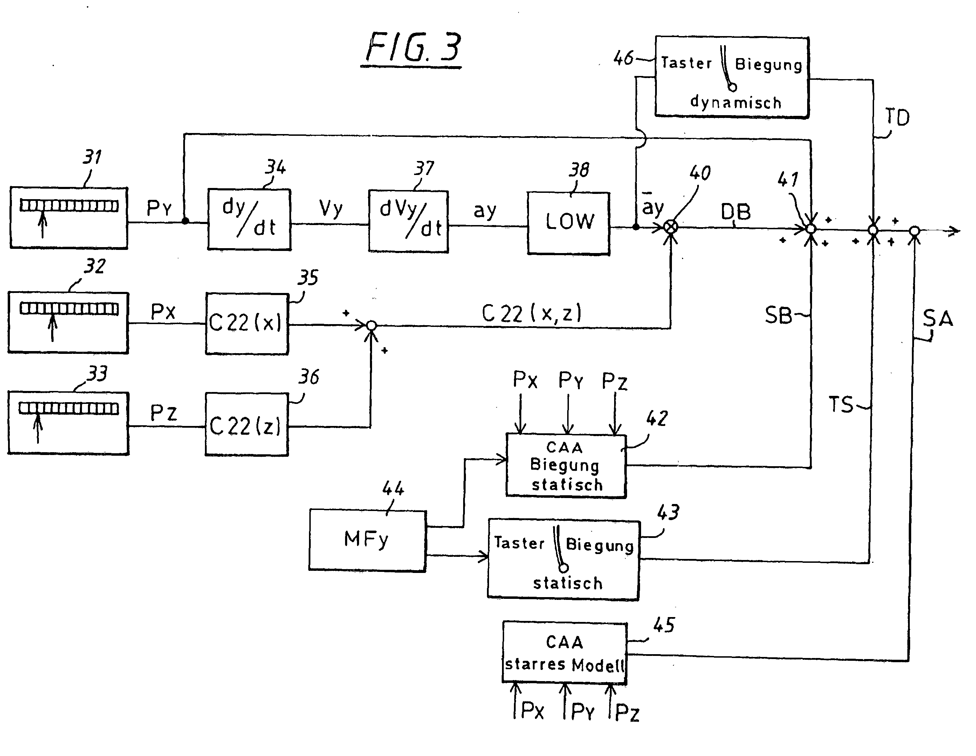

Bei der späteren softwaremäßigen Korrektur der Meßwerte werden aus der momentanen Ist-Position $\vec{P}$ die Polynomfunktionswerte mit Hilfe der gespeicherten Funktionskoeffizienten A0, A1 und A2 ermittelt und mit der jeweiligen Beschleunigung (ax) bzw. (ay) multipliziert. Das ist beispielhaft für die y-Position anhand des Funktionsdiagramms nach Figur 3 skizziert:

Dem von dem Meßwertgeber (31) gelieferten Positionsmeßwert (Py) wird an der Stelle (41) des Funktionsdiagramms ein Korrekturwert (DB) hinzugefügt, der die dynamische Biegung der Maschine beschreibt und der folgendermaßen gewonnen wird: Die Beschleunigung (ay) wird durch zweimaliges Differenzieren der Positonsmeßwerte (Py) in den Funktionsblöcken (34) und (37) gewonnen und in einem Tiefpaßfilter (38) geglättet. Die geglätteten Beschleunigungswerte (ay) werden multipliziert mit dem Tensorwert c22(x,z) den man erhält, indem die Positionsmeßwerte (Px) und (Pz) zur Berechnung von c22 anhand der abgespeicherten Funktionskoeffizienten A0, A1 und A2 benutzt werden.

Darüberhinaus werden jedoch zur vollständigen Fehlerkorrektur des Koordinatenmeßgeräts nach Figur 1 einige weitere Korrekturen angebracht. So wird die statische Biegung (SB) aufgrund der vom Tastkopf auf das zu vermessende Werkstück ausgeübten Meßkraft korrigiert, wie das in der Prioritätspatentanmeldung P 44 18 550.2 (EP-A2- 684 447 veröffentlicht am 29,11, 95) beschrieben ist. Das entsprechende Korrekturmodul (42) erfordert die laufende Eingabe der Meßpositionen (Px, Py, Pz) und die Eingabe der vom betreffenden Meßkraftgenerator (44) im Tastkopf (25) aufgeschalteten Meßkraft MF. Hier ist jedoch anzumerken, daß der ortsabhängige Biegetensor, der die statische Biegung des Koordinatenmeßgeräts aufgrund der über den Taster punktuell eingeleiteten Meßkraft beschreibt, andere Werte besitzt als der Biegetensor, der die dynamische Biegung des Koordinatenmeßgeräts aufgrund der von der Masseverteilung in den Meßschlitten abhängenden Reaktionskräfte beim Beschleunigen beschreibt.

Weiterhin werden durch das Modul (45) die Führungsfehler nach dem sogenannten starren Modell korrigiert, wie das in den einleitend zum Stand der Technik genannten Schriften beschrieben ist. Dieses Modul erfordert lediglich die laufende Eingabe der Positionskoordinaten, da der Einfluß von Kräften bei diesem Modell nicht berücksichtigt wird.

Außerdem wird auch die statische Biegung des an den Tastkopf (25) angesetzten Taststifts (26) durch ein Korrekturmodul (43) berechnet und der Korrektur des Positionsmeßwertes (Py) hinzugefügt. Bei dieser Korrektur wird so vorgegangen, wie das in der einleitend genannten Arbeit von Lotze beschrieben ist. Die Korrektur erfordert ebenfalls die Eingabe der von den Meßkraftgeneratoren (44) im Tastkopf (25) aufgeschalteten Meßkraft MF, ist allerdings positionsunabhängig, da der die Taststiftbiegung beschreibende Tensor und demzufolge auch die daraus abgeleiteten Korrekturparameter allein von dem jeweils benutzten Taststift abhängen und demzufolge getrennt vom übrigen Maschinenaufbau behandelt und ermittelt werden können.

In einem weiteren Korrekturmodul (46) wird schließlich noch die "dynamische Biegung" des an den Tastkopf (25) angesetzten Taststifts (26) korrigiert. Zur Erläuterung des Sachverhalts wird auf die Skizze nach Figur 7 verwiesen, in der in vergrößertem Maßstabe der Tastkopf (25) mit dem Taststift (26) im Schnitt in einer die x-Koordinate enthaltenden Ebene beim Scannen eines Lehrringes dargestellt ist. So wie die Massenträgheitskräfte entgegen der Beschleunigung ax die Pinole (24) verbiegen, unterliegt auch der Taststift (26) der Massenträgheit, kann jedoch nicht frei nachgeben, da er an dem Lehrring (39) anliegt, und biegt sich deshalb in entgegengesetzter Richtung durch geradeso, als wäre eine zusätzliche Meßkraft aufgeschaltet worden. Diese zusätzliche Kraft wird allerdings nicht von den Meßkraftgeneratoren im Tastkopf (25) aufgebracht und demzufolge auch nicht meßtechnisch erfaßt. Die Kraft entsteht auch nicht am Aufhängepunkt des Taststlfts, sondern ist abhängig von der Masseverteilung im Taststift selbst. Bei kurzen schlanken Taststiften mit geringer Masse kann angenommen werden, daß sich die Masse des beweglich aufgehängten Taststifts im wesentlichen in der relativ massiven Aufnahme (26a) für den Taststift konzentriert. In dem Falle kann die zusätzliche aufgrund der Beschleunigung ax auftretende Taststiftbiegung $\Delta$ s in gleicher Weise berechnet werden wie die Taststiftbiegung aufgrund der aufgeschalteten Meßkraft, indem einfach aus der Beschleunigung ax eine zusätzliche Meßkraftkomponente Mk' berechnet wird. Damit bleibt der zu multiplizierende gespeicherte Biegetensor der gleiche wie der, der für die statische Tasterbiegungskorrektur verwendet wird.

Sind diese Voraussetzungen nicht gegeben, weil beispielsweise lange, schwere und womöglich mehrfach verzweigte Taststiftkombinationen in die Halterung (26a) eingesetzt sind, dann sind für diesen Taststift separate dynamische Biegetensoren zu bestimmen und für die Korrektur zu speichern. Hier kann man so vorgehen, daß an einer beliebigen Stelle im Meßraum in einem ersten Schritt ein relativ steifer Taster durch Scannen eines Lehrrings oder vollumfängliches Abfahren einer Kalibrierkugel bei verschiedenen Geschwindigkeiten bzw. Beschleunigungen kalibriert wird, um wie vorstehend erläutert die dynamische Biegung des Maschinenaufbaus zu erfassen. Anschließend wird der gleiche Lehrring bzw. die gleiche Kalibrierkugel an der gleichen Stelle mit dem dann eingewechselten, "dynamisch" zu kalibrierenden zweiten Taster auf gleiche Weise abgefahren. Aus den Differenzen der Meßwerte ergibt sich dann die dynamische Steifigkeit des eingewechselten Tasters aufgrund der beim Beschleunigen auftretenden Massenreaktionskräfte.

Der Erfolg der vorstehend beschriebenen Korrekturmaßnahmen bei einem Koordinatenmeßgerät vom Portaltyp der Anmelderin ist in Figur 6 beispielhaft dargestellt. Auf dem Gerät wurde ein Lehrring mit einem Durchmesser von 50mm bei unterschiedlichen Scangeschwindigkeiten zwischen 5mm pro Sekunde und 80mm pro Sekunde gemessen. Aufgetreten ist die scheinbare Durchmesseränderung über der Soangeschwindigkeit, die sich als Folge der elastischen Deformationen des Maschinenaufbaus ergibt. Die mit (55) bezeichnete Kurve ergibt sich bei abgeschalteter Biegekorrektur am Meßort "links unten", d.h. direkt über dem Meßtisch, an der von der Säule (22) am weitesten entfernten Stelle. Die Kurve (56) ergab sich am Meßort "rechts unten", d.h. über dem Werkstücktisch neben der Säule (22). Man sieht, daß am erstgenannten Meßort bei der hohen Scangeschwindigkeit von 80mm pro Sekunde Durchmesserfehler bis ca. 30 Mikrometer gemessen werden.

Die Kurven (57) und (58) sind an den gleichen Meßorten mit eingeschalteter Korrektur aufgenommen worden. Die relative Durchmesseränderung lag dort unterhalb der Streubreite von einem Mikrometer, beim Meßort links unten (Kurve 58) sogar innerhalb von nur 0,2 Mikrometern!.

Im vorstehend beschriebenen Ausführungsbeispiel wurden die Biegeparameter durch Abscannen eines Lehrrings bei wechselnden Geschwindigkeiten und damit Beschleunigungen ermittelt. Natürlich ist es auch möglich, statt eines Lehrrings den Innenoder Außenumfang eines anderen gekrümmten Kalibrierkörpers abzufahren, beispielsweise den Äquator einer Kalibrierkugel. Die Biegeparameter lassen sich auch mit Hilfe der Meßsysteme ermitteln, über die die Auslenkung des Taststifts (26) im Tastkopf (25) gemessen wird, d.h. mit den hierfür in der Regel verwendeten Tauchspulsystemen. In diesem Fall sieht der Kalibriervorgang so aus, daß durch Antasten einer geeigneten Werkstückfläche der Meßbereich der z.B. Tauchspulsysteme mit unterschiedlichen Beschleunigungen durchfahren wird.

Daneben ist es natürlich auch jederzeit möglich, die Steifigkeit der Maschinenschlitten aus nach der Finite-Elemente-Methode gewonnenen Daten anhand der Masseverteilung in den Meßschlitten zu berechnen.

Desweiteren können auch separate Sensoren verwendet werden, um die Beschleunigung der Meßschlitten zu ermitteln.

Schließlich bleibt noch zu erwähnen, daß die Steifigkeitsdaten nicht für jedes einzelne Koordinatenmeßgerät individuell bestimmt werden müssen. Vielmehr ist es möglich, Steifigkeitsdaten unter Inkaufnahme einer herstellungsbedingten Streubreite ein einziges Mal für einen bestimmten Maschinentyp zu bestimmen und in Form von Korrekturparametern zu speichern, die dann jeweils nur mit der während des Meßvorgangs gemessenen aktuellen Beschleunigung der Maschinenschlitten multipliziert werden.

**Patentansprüche**

1. Verfahren zur Koordinatenmessung an Werkstücken mit einem Koordinatenmeßgerät umfassend mehrere Meßschlitten (22,23,24) und einen Taster, bei dem die ermittelten Meßwerte (Px,Py,Pz) mit gespeicherten Korrekturwerten verrechnet werden, wobei die Korrekturwerte (DB) das elastische Biegeverhalten des Koordinatenmeßgeräts beim abscannen gekrümmter Oberflächen mit hoher Geschwindigkeit beschreiben, indem

   - die das Biegeverhalten charakterisierenden Größen für mehrere Stellungen des Tasters im Meßbereich (30) der Maschine bestimmt werden,
   - die beschleunigungsabhängigen Anteile dieser Größen ermittelt und in Form von Korrekturwerten (c11,c22) abgespeichert werden, die das von der Position (Px,Py,Pz) der Meßschlitten (22,23,24) und zumindest von der Beschleunigung (ax,ay,az) der Meßschlitten abhängige Biegeverhalten des Koordinatenmeßgeräts beschreiben,
   - die Korrekturwerte bei der anschließenden Koordinatenmessung an Werkstücken mit den Meßwerten (Px,Py, Pz) des Koordinatenmeßgeräts verrechnet werden.

2. Verfahren nach Anspruch 1, wobei die das Biegeverhalten charakterisierenden Korrekturwerte (c) als mehrdimensionale Korrekturtabelle erstellt und abgespeichert werden.

3. Verfahren nach Anspruch 2, wobei bei der Korrekturrechnung Zwischenwerte zwischen den in der Tabelle gespeicherten Korrekturwerten (c) interpoliert werden.

4. Verfahren nach Anspruch 1, wobei die Positionsabhängigkeit der das Biegeverhalten charakterisierenden Korrekturwerte durch mathematische Funktionen (c11 = F(z)) angenähert wird.

5. Verfahren nach Anspruch 3, wobei die Näherungsfunktionen Polynome sind und deren Koeffizienten (A0,A1,A2) für die rechnerische Korrektur der Meßwerte gespeichert werden.

6. Verfahren nach einem der Ansprüche 1 - 5, wobei die gespeicherten Tabellen bzw. Funktionen abhängig vom Parameter Beschleunigung ($\vec{a}$) sind und die Beschleunigung ($\vec{a}$) gemessen oder ermittelt und in die Korrekturrechnung miteinbezogen wird.

7. Verfahren nach einem der Ansprüche 1 - 6 wobei die Korrekturwerte vorab bestimmt werden, indem ein Prüfkörper (39) nacheinander in verschiedenen Positionen im Meßbereich (30) des Koordinatenmeßgeräts fixiert und mit unterschiedlichen Geschwindigkeiten abgescannt wird.

8. Verfahren nach Anspruch 7, wobei der Prüfkörper ein Lehrring (39) ist, dessen Innenkontur der Taster (26) des Koordinatenmeßgeräts abscannt, oder eine Kalibrierkugel, deren Außenumfang der Taster abscannt.

9. Verfahren nach Anspruch 1, wobei zusätzlich die statischen Abweichung der Führungen (21,22a,23) der Meßschlitten (22,23,24) des Koordinatenmeßgeräts von einem geradlinigen und rechtwinkligen Koordinatensystem ermittelt und daraus weitere Korrekturwerte berechnet und gespeichert werden und diese weiteren Korrekturwerte bei der anschließenden Vermessung von Werkstücken ebenfalls mit den Koordinatenmeßwerten verrechnet werden.

10. Verfahren nach Anspruch 9, wobei die folgenden Verfahrensschritte, jedoch nicht notwendigerweise in der genannten Reihenfolge, durchgeführt werden:

   - Die elastischen Verbiegungen des Koordinatenmeßgerätes werden im Zuge eines ersten Kalibrierverfahrens abhängig von den auf das KMG ausgeübten Kräften ermittelt und aus den ermittelten Werten wird ein erster Satz von Korrekturwerten (DB) errechnet und abgespeichert, der abhängig von der Stellung des Tasters im Meßbereich des KMG und zusätzlich abhängig von der Beschleunigung ($\vec{a}$) ist, die z.B. die Antriebe des Koordinatenmeßgeräts auf die Meßschlitten (22,23,24) des Koordinatenmeßgeräts ausüben,

- die statischen Abweichungen der Führungen (21,22a,23) der Meßschlitten werden im Zuge eines zweiten Kalibrierverfahrens ermittelt und aus diesen ermittelten Führungsabweichungen wird ein zweiter Satz beschleunigungsunabhängiger Korrekturwerte (SA) errechnet und abgespeichert, die ebenfalls abhängig von der Stellung des Tasters im Meßbereich des KMG's sind.
- Bei der Vermessung von Werkstücken werden beide Sätze von Korrekturwerten mit den von dem Meßsystem des KMG gelieferten Koordinatenmeßwerten (Px,Py,Pz) verrechnet.

**11.** Verfahren nach einem der Ansprüche 1 - 10, wobei zusätzlich die elastischen Verbiegungen des Koordinatenmeßgeräts aufgrund der Meßkraft (MF) zwischen Taster (26) und Werkstück (29,39) bestimmt und hieraus ein dritter Satz von Korrekturwerten (TB) berechnet wird, der ebenfalls zur Errechnung des korrekten Koordinatenmeßwerts herangezogen wird.

**12.** Verfahren nach einem der Ansprüche 1 - 11, wobei die Beschleunigung (ax,ay,az) der Meßschlitten ermittelt wird, indem die Positionsmeßwerte der den Meßschlitten zugeordneten Meßsysteme (31,32,33) zweifach nach der Zeit differenziert werden.

**13.** Verfahren nach einem der Ansprüche 1 - 11, wobei die Beschleunigung (ax,ay,az) der Meßschlitten durch zusätzliche Beschleunigungsaufnehmer gemessen wird.

**14.** Verfahren nach einem der Ansprüche 1 - 13, wobei zusätzlich das Biegeverhalten des nachgiebig im Tastkopf gelagerten Taststifts infolge der bei Beschleunigung des Tastkopfs auftretenden und den Taststift verformenden Massenreaktionskräfte bestimmt und bei der Korrektur der gemessenen Koordinatenmeßwerte berücksichtigt wird.

**15.** Verfahren nach einem der Ansprüche 1 - 14, wobei die Beschleunigung von den Antrieben eingeleitet wird.

**16.** Verfahren nach einem der Ansprüche 1 - 14, wobei die Beschleunigung bei einem handgeführten Koordinatenmeßgerät von der Bedienperson eingeleitet wird. geänderter Anspruch 17 gemäß Hauptantrag:

**17.** Koordinatenmessgerät zur Koordinatenmessung an Werkstücken, **dadurch gekennzeichnet, dass** es Mittel aufweist, vorzugsweise Programm-Mittel, um ein Verfahren gemäß einem der Ansprüche 1 bis 16 durchzuführen.

## Claims

**1.** Method for coordinate measurement on workpieces, having a coordinate measuring machine comprising a plurality of measurement slides (22, 23, 24) and a probe, in the case of which the measured values (Px, Py, Pz) determined are corrected as follows with the aid of stored correction values, the correction values (DB) describing the elastic bending behaviour of the coordinate measuring machine during scanning of curved surfaces at high speed in which:

- the variables **characterizing** the bending behaviour are determined for a plurality of positions of the probe in the measurement range (30) of the machine,
- the acceleration-dependent fractions of these variables are determined and stored in the form of correction values (c11, c22) which describe the bending behaviour of the coordinate measuring machine as a function of the position (Px, Py, Pz) of the measurement slides (22, 23, 24), and at least of the acceleration (ax, ay, az) of the measurement slides, and
- the measured values (Px, Py, Pz) of the coordinate measuring machine are corrected with the aid of the correction values during the subsequent coordinate measurement on workpieces.

**2.** Method according to Claim 1, in which the correction values (c) **characterizing** the bending behaviour are compiled and stored as a multidimensional correction table.

**3.** Method according to Claim 2, in which during the correction computation intermediate values are interpolated between the correction values (c) stored in the table.

**4.** Method according to Claim 1, in which the positional dependence of the correction values **characterizing** the bending behaviour is approximated by mathematical functions (c11 = F(z)).

5. Method according to Claim 3, in which the approximation functions are polynomials and their coefficients (A0, A1, A2) are stored for the computational correction of the measured values.

6. Method according to one of Claims 1-5, in which the stored tables or functions are dependent on the parameter of acceleration ($\vec{a}$), and the acceleration ($\vec{a}$) is measured or determined and incorporated into the correction computation.

7. Method according to one of Claims 1-6, in which the correction values are determined in advance by fixing a test piece (39) successively in different positions in the measurement range (30) of the coordinate measuring machine, and scanning it at different speeds.

8. Method according to Claim 7, in which the test piece is a gauge ring (39) whose inner contour is scanned by the probe (26) of the coordinate measuring machine, or is a calibration ball whose outer circumference is scanned by the probe.

9. Method according to Claim 1, in which in addition the static deviation of the guides (21, 22a, 23) of the measurement slides (22, 23, 24) of the coordinate measuring machine from a rectilinear and rectangular coordinate system is determined, and further correction values are calculated therefrom and stored, and the coordinate measured values are likewise corrected with the aid of these further correction values during the subsequent measurement of workpieces.

10. Method according to Claim 9, in which the following method steps are carried out, although not necessarily in the said sequence:

- the instances of elastic bending of the coordinate measuring machine are determined in the course of a first calibration method as a function of the forces exerted on the CMM, and the values determined are used to calculate and store a first set of correction values (DB) which is a function of the position of the probe in the measurement range of the CMM and, in addition, of the acceleration ($\vec{a}$), which, for example, the drives of the coordinate measuring machine exert on the measurement slides (22, 23, 24) of the coordinate measuring machine,
- the static deviations of the guides (21, 22a, 23) of the measurement slides are determined in the course of a second calibration method, and these determined guide deviations are used to calculate and store a second set of acceleration-independent correction values (SA) which are likewise a function of the position of the probe in the measurement range of the CMM, and
- during the measurement of workpieces the coordinate measured values (Px, Py, Pz) supplied by the measurement system of the CMM are corrected with the aid of both sets of correction values.

11. Method according to one of Claims 1-10, in which in addition the instances of elastic bending of the coordinate measuring machine are determined on the basis of the measuring force (MF) between probe (26) and workpiece (29, 39) and from this there is calculated a third set of correction values (TB) which is likewise used to calculate the correct coordinate measured value.

12. Method according to one of Claims 1-11, in which the acceleration (ax, ay, az) of the measurement slides is determined by differentiating twice with respect to time the measured positional values of the measurement systems (31, 32, 33) assigned to the measurement slides.

13. Method according to one of Claims 1-11, in which the acceleration (ax, ay, az) of the measurement slides is measured by additional acceleration pick-ups.

14. Method according to one of Claims 1-13, in which in addition the bending behaviour of the feeler, flexibly mounted in the probe head, owing to the mass reaction forces which occur during the acceleration of the probe head and deform the feeler, is determined, and is taken into account in the correction of the measured coordinate values.

15. Method according to one of Claims 1-14, in which the acceleration is initiated by the drives.

16. Method according to one of Claims 1-14, in which the acceleration is initiated by the operator in the case of a hand-held coordinate measuring machine.

17. Coordinate measuring machine for coordinate measurement on workpieces, **characterized in that** it has means, preferably programming means, for carrying out a method in accordance with one of Claims 1 to 16.

## Revendications

1. Procédé pour la mesure de coordonnées d'objets avec un appareil de mesure de coordonnées comprenant plusieurs coulisseaux de mesure (22, 23, 24) et un palpeur, dans lequel les valeurs de mesure déterminées (Px, Py, Pz) sont compensées avec des valeurs de correction mémorisées, les valeurs de correction (DB) décrivant le comportement élastique de flexion de l'appareil de mesure de coordonnées lors du balayage de surfaces courbes à grande vitesse, dans lequel

   - on détermine les grandeurs caractérisant le comportement de flexion pour plusieurs positions du palpeur dans le champ de mesure (30) de la machine,
   - on détermine les parties de ces grandeurs qui dépendent de l'accélération et on les mémorise sous la forme de valeurs de correction (c11, c22), qui décrivent le comportement de flexion de l'appareil de mesure de coordonnées dépendant de la position (Px, Py, Pz) des coulisseaux de mesure (22, 23, 24) et en particulier de l'accélération (ax, ay, az) des coulisseaux de mesure,
   - on compense les valeurs de mesure (Px, Py, Pz) de l'appareil de mesure de coordonnées avec les valeurs de correction lors de la mesure ultérieure de coordonnées d'objets.

2. Procédé selon la revendication 1, dans lequel on établit et on mémorise les valeurs de correction (c) caractérisant le comportement de flexion sous la forme de tables de correction multidimensionnelles.

3. Procédé selon la revendication 2, dans lequel on interpole, lors du calcul des corrections, des valeurs intermédiaires entre les valeurs de correction (c) mémorisées dans la table.

4. Procédé selon la revendication 1, dans lequel on approche la relation de dépendance des valeurs de correction caractérisant le comportement de flexion par rapport à la position par des fonctions mathématiques (c11 = F(z)).

5. Procédé selon la revendication 3, dans lequel les fonctions d'approximation sont des polynômes et on mémorise leurs coefficients (A0, A1, A2) pour la correction mathématique des valeurs de mesure.

6. Procédé selon l'une quelconque des revendications 1 à 5, dans lequel les tables ou les fonctions mémorisées dépendent du paramètre accélération ($\vec{a}$) et on mesure ou on détermine l'accélération ($\vec{a}$) et on l'incorpore dans le calcul des corrections.

7. Procédé selon l'une quelconque des revendications 1 à 6, dans lequel on détermine au préalable les valeurs de correction, en fixant une éprouvette (39) successivement dans différentes positions dans le champ de mesure (30) de l'appareil de mesure de coordonnées et en la balayant avec des vitesses différentes.

8. Procédé selon la revendication 7, dans lequel l'éprouvette est un calibre annulaire (39), dont le palpeur (26) de l'appareil de mesure de coordonnées balaye le contour intérieur, ou une bille de calibrage, dont le palpeur balaye la périphérie extérieure.

9. Procédé selon la revendication 1, dans lequel on détermine en outre l'écart statique des guides (21, 22a, 23) des coulisseaux de mesure (22, 23, 24) de l'appareil de mesure de coordonnées par rapport à un système de coordonnées droit et orthogonal et on calcule à partir de celui-ci d'autres valeurs de correction et on les mémorise, et on compense également les valeurs de mesure des coordonnées avec ces autres valeurs de correction lors de la mesure ultérieure d'objets.

10. Procédé selon la revendication 9, dans lequel on exécute les étapes de procédé suivantes, toutefois pas nécessairement dans l'ordre indiqué:

   - on détermine les flexions élastiques de l'appareil de mesure de coordonnées au cours d'une première opération de calibrage en fonction des efforts exercés sur l'appareil de mesure de coordonnées et on calcule à partir des valeurs déterminées et on mémorise un premier jeu de valeurs de correction (DB), qui dépend de la position du palpeur dans le champ de mesure de l'appareil de mesure de coordonnées et qui dépend en plus de l'accélération ($\vec{a}$), que par exemple les moyens d'entraînement de l'appareil de mesure de coordonnées exercent sur les coulisseaux de mesure (22, 23, 24) de l'appareil de mesure de coordonnées,

- on détermine les écarts statiques des guides (21, 22a, 23) des coulisseaux de mesure au cours d'une seconde opération de calibrage et on calcule et on mémorise à partir de ces écarts de guidage déterminés un deuxième jeu de valeurs de correction (SA) indépendant de l'accélération, qui dépendent également de la position du palpeur dans le champ de mesure de l'appareil de mesure de coordonnées,

- lors de la mesure d'objets, on compense les valeurs de mesure de coordonnées (Px, Py, Pz) fournies par le système de mesure de l'appareil de mesure de coordonnées avec les deux jeux de valeurs de correction.

11. Procédé selon l'une quelconque des revendications 1 à 10, dans lequel on détermine en outre les flexions élastiques de l'appareil de mesure de coordonnées dues à l'effort de mesure (MF) entre le palpeur (26) et l'objet (29, 39), et on calcule à partir de celles-ci un troisième jeu de valeurs de correction (TB) qui est également pris en compte pour le calcul de la valeur correcte de mesure de coordonnées.

12. Procédé selon l'une quelconque des revendications 1 à 11, dans lequel on détermine l'accélération (ax, ay, az) des coulisseaux de mesure, en différentiant deux fois par rapport au temps les valeurs de position des systèmes de mesure (31, 32, 33) associés aux coulisseaux de mesure.

13. Procédé selon l'une quelconque des revendications 1 à 11, dans lequel on mesure l'accélération (ax, ay, az) des coulisseaux de mesure par des enregistreurs d'accélération supplémentaires.

14. Procédé selon l'une quelconque des revendications 1 à 13, dans lequel on détermine en outre le comportement de flexion de la tige de palpeur montée de façon souple dans la tête de palpeur par suite des efforts de réaction de masses apparaissant lors de l'accélération de la tête de palpeur et déformant la tige de palpeur et on en tient compte lors de la correction des valeurs de mesure de coordonnées mesurées.

15. Procédé selon l'une quelconque des revendications 1 à 14, dans lequel l'accélération est appliquée par les moyens d'entraînement.

16. Procédé selon l'une quelconque des revendications 1 à 14, dans lequel l'accélération est appliquée par l'opérateur dans le cas d'un appareil de mesure de coordonnées à conduite manuelle.

17. Appareil de mesure de coordonnées pour la mesure de coordonnées d'objets, **caractérisé en ce qu'**il présente des moyens, de préférence des moyens programmés, pour mettre en oeuvre un procédé selon l'une quelconque des revendications 1 à 16.

## _FIG. 1_

## _FIG. 6_

# FIG.2

FIG. 3

EP 0 684 448 B1

## _FIG. 4_

## _FIG. 5_

FIG. 7

EP 0 684 448 B1

## FIG. 8a

## FIG. 8b